# EUROPEAN PATENT SPECIFICATION

(11) **EP 0 783 642 B1**
(45) Date of publication and mention of the grant of the patent: **20.07.2005**
(21) Application number: 95930415.5
(22) Date of filing: 19.09.1995
(51) Int. Cl.: F16K 31/122, G05D 23/12, F16K 47/04

(54) **VALVE FOR A SYSTEM HAVING A HEAT-CARRYING MEDIUM**
VENTIL FÜR EIN WÄRMETRÄGERSYSTEM
VANNE POUR SYSTEME A MILIEU CALOPORTEUR

(30) Priority: 23.09.1994 DK 109894
(43) Date of publication of application: 16.07.1997
(73) Proprietor: FRESE ARMATUR A/S, 4200 Slagelse (DK)
(72) Inventor: GYLOV, Hans, Henrik, DK-2840 Holte (DK); JORGENSEN, Ole, DK-4200 Slagelse (DK); MOLLER, Carsten, DK-4200 Slagelse (DK)
(74) Representative: Lund, Preben
(86) International application number: PCT/DK1995/000373
(87) International publication number: WO 1996/009484

(56) References cited:
- DE-C- 2 615 895
- US-A- 5 178 324

## Description

This invention concerns a valve assembly for a system having a heat-carrying medium which flows through a number of heat exchangers in the system, said valve assembly having a thermostat valve with a housing comprising an inlet and an outlet, a spindle with a seal which can be displaced by a thermostat bellows and which, depending on the expansion/contraction of the thermostat bellows and against the force of a spring which surrounds the spindle, can respectively close and open an opening with a seating in a transverse wall in the housing between the inlet and the outlet.

A central heating plant with thermostat valves and a differential pressure valve is known from U.S. Patent No. 5,178,324, said plant being configured in such a manner that it is possible to control the flow in the entire plant, a single part of the plant or in several zone-divided sections of the plant.

This plant comprises several heat exchangers each provided with its own thermostat valve, said heat exchangers being intended to be placed in a number of at least one in each room in a building, and where the valves are disposed in the piping of the plant.

In central heating plants it is important that the water is distributed through the plant in a pre-calculated proportion so that the dimensioned heat requirements of the individual heat exchangers are taken into consideration.

It is also important that the heat-carrying liquid remains in the heat exchangers for a period of time which is long enough to allow a reasonable amount of heat to be dissipated in the rooms of the building which are to be heated by the heat exchangers, which can be ensured by means of a differential pressure valve placed in the individual branches of the plant, in that this valve can regulate the flow of the heat-carrying fluid.

Furthermore, it is important that the differential pressure across the individual heat exchangers is so low that noise does not arise in the valves, in that such noise can cause inconvenience, either directly or by transmission through the piping system.

In the individual rooms, the flow of heat-carrying liquid through the heat exchangers or each of the heat exchangers can be controlled by means of thermostatic valves which, depending on the temperature in the room, can open more or less to allow flow through the heat exchanger(s) so that the emission of heat to the rooms can be held within those limits which are determined by the accuracy of the thermostatic valves, and by the temperature which the user of the room desires to maintain by the adjustment of the thermostatic valve or valves.

When ordinary thermostatic valves are mounted in a length of piping which leads the heat-carrying medium from a heat exchanger to the subsequent heat exchangers, each of these thermostatic valves will be dependent on the others. Thus if ten thermostatic valves are mounted in a length of piping, and nine of these are closed, the differential pressure across the open valve will be increased. This results in an increase in the flow through the associated heat exchanger, and the increased flow can also give rise to disturbing noise.

This situation can arise, for example, at times of the year when the incidence of sunlight makes heating unnecessary. If there is also opened a window in that room in which the open thermostatic valve is mounted, the associated heat exchanger will receive a considerably greater flow than would otherwise be the case.

It is also difficult to achieve a mutual balance between the individual pipes in the building, the reason being that the flow will change depending on the differential pressure. Today, this drawback is overcome by providing each length of piping with an extra valve which is carefully adjusted to ensure the balance between the individual pipes.

A thermostat valve which further is provided with an adjustable pre-setting is described in DE-A-2.615.895. However, when this valve is used in a plant as described above comprising several heat exchangers, each provided with a thermostat valve of this kind, the above-mentioned drawbacks will arise, as the differential pressure, and with that the flow in each of these thermostat valves, will depend on the others.

The object of the present invention is therefore to improve a valve of the kind described so that the above-mentioned drawbacks of a heating plant can be avoided.

This object is achieved by means of a valve assembly of the above-mentioned kind, said valve assembly according to the invention being characteristic in that the valve assembly is further provided with a membrane which is controlled by a differential pressure for the regulation of the differential pressure of the heat-carrying medium across the adjustable pre-setting, and the thermostatic valve consisting of the seating and the seal between the inlet and the membrane, and that the thermostatic valve is arranged to be able to cut off the flow between the inlet and the outlet independently of the adjustable pre-setting.

The membrane in the valve assembly according to the invention thus maintains a constant differential pressure across the adjustable pre-setting and across the seating and the seal together.

It is hereby achieved that the valve assembly according to the invention can be adjusted to allow only a predetermined maximum amount of the heat-carrying medium to flow through the valve independently of the remaining heat exchangers and pressure conditions in the system. If the differential pressure is increased, for example because one or more of the remaining valves on a length of piping are closed, this will not result in an increase in the flow through the individual heat exchanger.

Moreover, in certain cases a reduction in noise can be achieved, in that the pressure/flow is reduced in three steps, whereas in the ordinary thermostatic valves this is effected in one or two steps.

Furthermore, it will not be necessary to mount an extra valve in order to mutually balance the individual pipe lengths.

The dependent claims disclose expedient arrangements of the valve assembly according to the invention.

In the following, the valve assembly according to the invention will be described in more detail with reference to the drawing, where
- fig. 1: schematically shows a commonly known, double pipe heating plant, and
- fig. 2: shows a section through an embodiment of the valve assembly according to the invention.

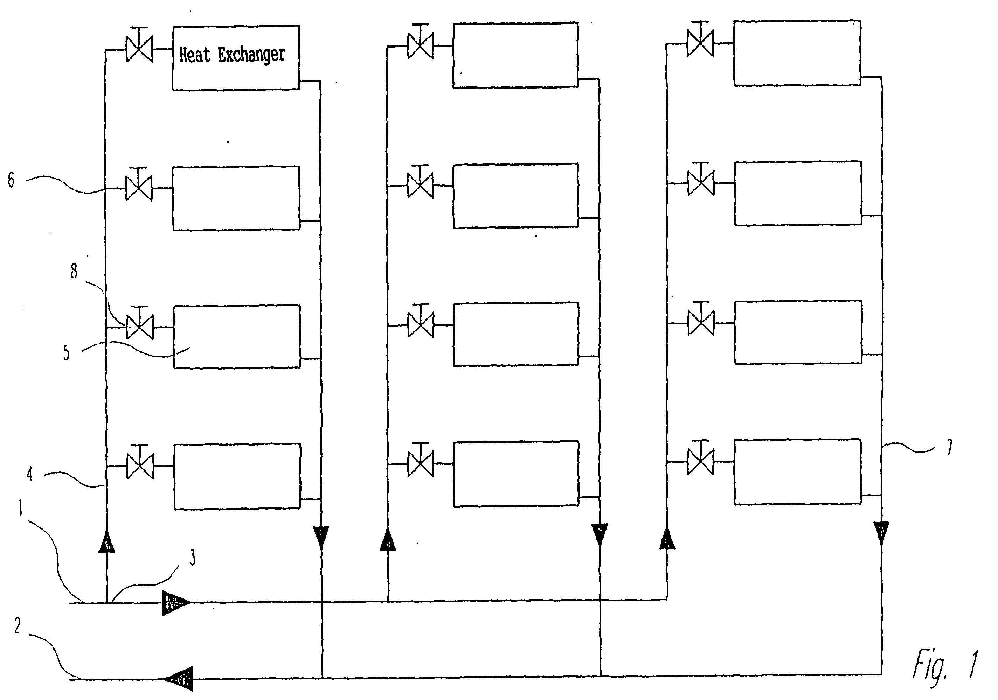

In fig. 1 is shown a double-pipe heating plant, one pipe of which is the main pipe 1 which leads the heat - carrying medium, such as water, from a source of heat, which is not shown, in the heating plant, and the second pipe is a return pipe 2 which leads the medium back to the boiler.

From a branch point 3 there extends a first side pipe 4 which leads the medium forward to a number of heat exchangers, each of which is connected to the first side pipe 4 at connection points 6 and to the second side pipe 7 which leads the medium back to the return pipe 2.

Each heat exchanger 5 is provided with a valve 8 according to the invention, which is arranged to control the flow of the heat-carrying medium through the respective heat exchangers 5.

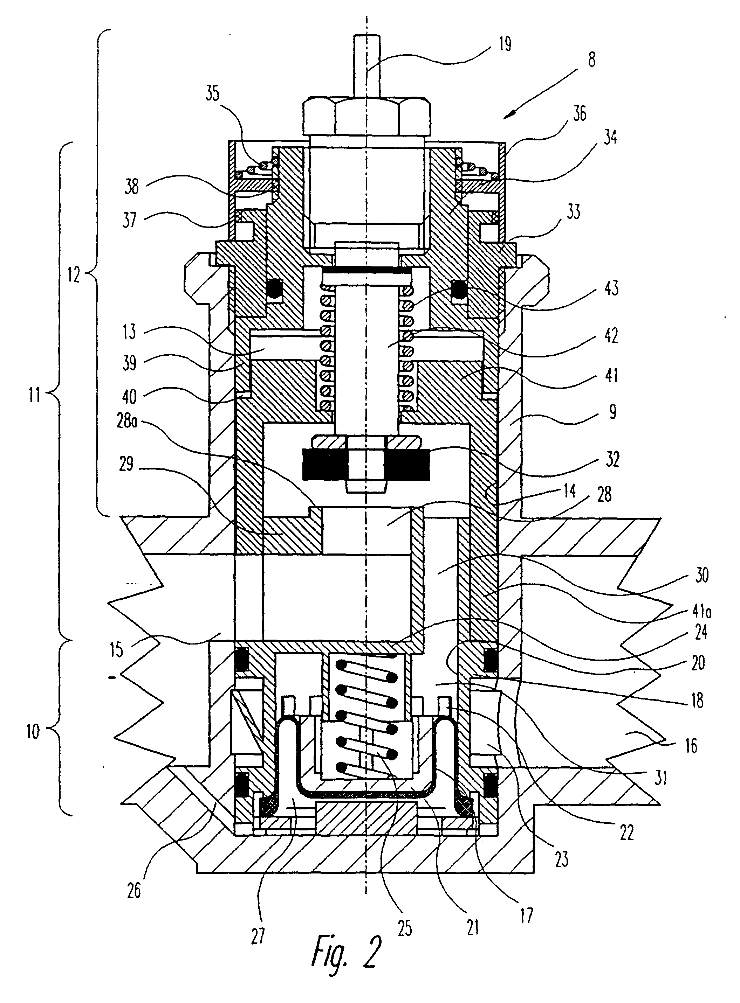

An embodiment of a valve 8 according to the invention is shown in fig. 2, and consists of a housing 9, which contains a combination of a differential pressure valve 10, an adjustable pre-setting 11 and a thermostat valve 12, all said three parts 10, 11 and 12 being in themselves of known constructions.

The housing 9 has a longitudinal bore 13 with an internal wall 14, and transversly hereto an inlet 15 and an outlet 16 for the medium.

The differential pressure valve 10 comprises a membrane mechanism with a membrane 17 or bellows of flexible material which is disposed in a first bush 18 which is placed in the bore 13 which lies coaxially in the axis 19 of the housing 9.

The membrane 17 can be described as being a short tube, one end of which at a radial distance is turned back over the other end, after which the radial outer part is firmly secured to an internal wall 20 in the first bush 18. The radial innermost part of the membrane 17 is secured to a disk or cup 21. By displacement of the cup forwards and backwards in the direction of the axis 19 of the housing 9, the membrane will more or less fold in on itself, whereby the the radial outer part can be longer or shorter and thereby roll in over a number of slots 22 which extend axially and are distributed along the circumference of the first bush 18.

The first bush 18 has an annular recess 23 opposite the slots 23. Between a first transverse wall 24 and the cup 21 there is inserted a helical spring 25. A first channel 26 leads from the inlet 15 to a chamber 27 under the membrane 17.

From fig. 2 it will be clear that a medium which is led in through the inlet 15 will flow through the first channel 26 and exercise a force against the upper side of the membrane 17 in the chamber 27, so that the cup 21 compresses the spring 25.

From the inlet 15, the medium can also flow through an opening 28 with a seating 28a which is configured in a second transverse wall 29 in the first bush 18, and flow further through at least one longitudinal, second channel 30 which extends to a chamber 31 in which the slots 22 are placed.

By a suitable dimensioning of the area of the membrane 17 in relation to the pressure of the spring 25, with a rolling in of the membrane over the slots 22 a desired differential pressure can be generated across the pre-setting 11 and a closing element consisting of the seating 28a and a herewith cooperating seal 32 (see later).

The adjustable pre-setting 11 can be set for a certain through-flow opening by turning around the axis 19, and can thereafter be locked firmly in its setting. For example, it can be configured in the following manner:

In one end of the housing, in the bore 13 there is screwed a threaded bush 33 in which a locking element 34 is secured in a substantially indisplaceable manner in the direction of the axis 19 of the housing 9, but is able to be turned around said axis. The locking element 34 is secured against the pressure of a spring 35 which is compressed between a flange at the free end of the locking element 34 and a surface on a bush-shaped setting element 36 at the free end of the threaded bush 33. In a radial plane, the threaded bush 33 and the setting element 36 have cooperating teeth 37 which extend for a short distance radially. In a locking position for the setting element 36 brought about by the spring 35, the teeth 37 prevent a relative rotation of the parts 33, 36, whereby the locking element 34 is also prevented from turning. On the other hand, in a second position where the setting element 36 against the pressure of the conical spring 35 is drawn out axially in relation to the threaded bush 33, the engagement between the teeth 37 is terminated. In a second radial plane there are cooperating teeth 38 on the setting element 36 and the locking element 34, whereby the setting element 36 can turn the locking element 34 in the housing 9 when the setting element 36 is drawn axially out of the threaded bush 33, in that the teeth 38 have sufficient axial extension for this purpose.

The end of the locking element 34 which faces towards the inside of the housing 9 has axially-projecting pegs 39 which engage in tracks 40 in a cup-shaped bush 41, so that the bush 41 can be turned in the bore 13 by means of the locking element 34 when this is turned by means of the setting element 36.

The edge on the mouth of the cup-shaped bush 41, for example for a half of the circumference, is cut off in such a manner that the remaining half 41a of the edge extends beyond the inlet 15 in the housing 9, and closes this when the locking element 34 is turned to a position in which said half part 41a on the cup-shaped bush 41 is opposite the inlet 15. By a turning of less than 180° of the locking element 34 and the cup-shaped bush 41 around their longitudinal axes, which coincide with the longitudinal axis 19 of the housing 9, there can be opened for partial flow through the inlet 15, and by a turning of 180° to the position shown in fig. 2, there can be opened to full extent for said flow.

With this construction the pre-setting 11 can be set by first drawing the setting element 36 axially out of the threaded bush 36, and thereafter by turning the setting element 36 to a desired angle around the axis 19 of the housing 9, whereby the cup-shaped bush 41 is also turned as a consequence of the engagement between the pegs 39 and the tracks 40, so that the area of the through-flow opening at the inlet 15 is regulated to the desired size.

The thermostatic valve 12 is of a commonly known construction. The cup-shaped bush 41 and the locking element 34 are disposed around a spindle 42 which is surrounded by a helical spring 43, which with its one end abuts against the locking element 34 in the housing 9 and with its other end against the bottom of the cup-shaped bush 41.

Outside the housing 9, the spindle 42 is connected to a thermostat bellows (not shown in the drawing) which, depending on the temperature of the surroundings, can displace the spindle 42 in its longitudinal direction against the pressure from the spring 43. Inside the cup-shaped bush 41 the spindle 42 also has the above-mentioned seal 32, which by contact against the seating 28a can close the opening 28 in the transverse wall 29 of the first bush 18, regardless of the setting of the differential pressure valve 10 and the adjustable pre-setting 11.

## Claims

1. Valve assembly for a system having a heat-carrying medium which flows through a number of heat exchangers (5) in the system, including a thermostat valve (12) with a housing (9) comprising an inlet (15) and an outlet (16), a spindle (42) which can be displaced by a thermostat bellows and having a seal (32), and which depending on the expansion/contraction of the thermostat bellows and against the pressure of a spring (43) which surrounds the spindle (42) can respectively close and open an opening (28) with a seating (28a) in a transverse wall (29) in the housing (9) between the inlet (15) and the outlet (16), said valve assembly further including an adjustable pre-setting (11), **characterized in that** the valve assembly (8) also has a differential pressure controlled membrane (17, 21) for the regulation of the differential pressure of the heat-carrying medium across the adjustable pre-setting (11) and the thermostat valve (12), said thermostat valve consisting of the seating (28a) and the seal (32) and being located between the inlet (15) and the membrane (17, 21), and that the thermostat valve (12) is arranged to be able to cut off the flow between the inlet (15) and the outlet (16) independently of the adjustable pre-setting (11).

2. Valve assembly according to claim 1, **characterized in that** the membrane (17) of the differential pressure valve (10) is placed in a first bush (18) which is disposed in the housing (9) and suspended coaxially around the axis (19) of same, that a spring (25) is provided between the membrane (17) and the bottom of the first bush (18), that a first channel (26) from the inlet (15) leads to the upper-side of the membrane (17), that at least one second channel (30) leads from the opening (28) to the underside of the membrane (17), which is arranged to be able to roll in over slots (22) in the first bush (18) for at least a partial closing of the slots (22), and **in that** the housing (9) opposite the slots (22) has an annular recess (23) which is open towards the outlet (16).

3. Valve assembly according to claim 1, **characterized in that** in the housing (9), and suspended coaxially around the axis (19) of same, the adjustable pre-setting (11) comprises a cup-shaped bush (41), the mouth of which has an edge which is cut off in such a manner that the remaining half (41a) can extend beyond the inlet (15) in a given turned position of the cup-shaped bush (41).

4. Valve assembly according to claim 3, **characterized in that** a locking element (34) is secured in an indisplaceable manner in the direction of the axis (19) of the housing (9), but rotatable around the axis (19) by one end of a screwed-in threaded bush (33) in the housing (9), that the threaded bush (33) is surrounded by a setting element (36), that in a radial plane of the threaded bush (33) and the setting element (36) there are cooperating teeth (37) with a small axial extension which, in the locking position for the setting element (36), prevent mutual rotation between the threaded bush (33) and the setting element (36), and **in that** the locking element (34) and the setting element (36) in a second axial plane have cooperating teeth (38), where the teeth on the locking element (34) have a predetermined radial length so that the setting element (36), in a second position withdrawn from the locking position, can turn the locking element (34) in the housing (9).

5. Valve assembly according to claim 4, **characterized in that** the locking element (34) has axially-projecting pegs (39) which engage in tracks in the circumference of the cup-shaped bush (41).

6. Valve assembly according to claims 3-5, **characterized in that** the setting element (36) is held in the locking position by a spring (35) which is inserted between a flange on the free end of the locking element (34) and a contact surface on the setting element (36).

7. Valve assembly according to claim 1, **characterized in that** said spindle (42) extends through the cup-shaped bush (41) and the locking element (34), that said spring (43), which surrounds said spindle (42), is compressed between the locking element (34) and the bottom of the cup-shaped bush (41), and **in that** on the end which projects inside the cup-shaped bush (41), the spindle (42) has the said seal (32) which is arranged to lie up against the seating (28a) and close the opening (28).

## Patentansprüche

1. Ventilbaugruppe für ein System mit einem Wärmeträgermedium, das durch eine Reihe von Wärmetauschern (5) in dem System strömt, die ein Thermostatventil (12) mit einem Gehäuse (9), das einen Einlass (15) und einen Auslass (16) umfasst, und einer Spindel (42) enthält, die durch einen Thermostatbalg verschoben werden kann und eine Dichtung (32) aufweist, und die in Abhängigkeit von der Ausdehnung/dem Zusammenziehen des Thermostatbalgs und gegen den Druck einer Feder (43), die die Spindel (42) umschließt, eine Öffnung (28) mit einer Auflagefläche (28a) in einer Querwand (29) in dem Gehäuse (9) zwischen dem Einlass (15) und dem Auslass (16) schließen bzw. öffnen kann, wobei die Ventilbaugruppe des Weiteren eine verstellbare Voreinstellung (11) enthält, **dadurch gekennzeichnet, dass** die Ventilbaugruppe (8) darüber hinaus eine differenzdruckgesteuerte Membran (17,21) aufweist, die den Differenzdruck des Wärmeträgermediums über die verstellbare Voreinstellung (11) und das Thermostatventil (12) reguliert, wobei das Thermostatventil aus der Auflagefläche (28a) und der Dichtung (32) besteht und zwischen dem Einlass (15) und der Membran (17,21) angeordnet ist, und dass das Thermostatventil (12) den Strom zwischen dem Einlass (15) und dem Auslass (16) unabhängig von der verstellbaren Voreinstellung (11) unterbrechen kann.

2. Ventilbaugruppe nach Anspruch 1, **dadurch gekennzeichnet, dass** die Membran (17) des Differenzdruckventils (10) in einer ersten Buchse (18) angeordnet ist, die sich in dem Gehäuse (9) befindet und koaxial um die Achse (19) desselben herum aufgehängt ist, dass eine Feder (25) zwischen der Membran (17) und dem Boden der ersten Buchse (18) vorhanden ist, dass ein erster Kanal (16) von dem Einlass (15) zu der Oberseite der Membran (17) führt, dass wenigstens ein zweiter Kanal (30) von der Öffnung (28) zur Unterseite der Membran (17) führt, die über Schlitze (22) in der ersten Buchse (18) rollen kann, um die Schlitze (22) wenigstens teilweise zu verschließen und dass das Gehäuse (9) gegenüber den Schlitzen (22) eine ringförmige Aussparung (23) aufweist, die zu dem Auslass (16) hin offen ist.

3. Ventilbaugruppe nach Anspruch 1, **dadurch gekennzeichnet, dass** in dem Gehäuse (9) und koaxial um die Achse (19) desselben herum aufgehängt die verstellbare Voreinstellung (11) eine topfförmige Buchse (41) umfasst, deren Öffnung einen Rand aufweist, der so abgeschnitten ist, dass sich die verbleibende Hälfte (41a) an einer bestimmten Drehposition der topfförmigen Buchse (41) über den Einlass (15) hinaus erstrecken kann.

4. Ventilbaugruppe nach Anspruch 3, **dadurch gekennzeichnet, dass** ein Arretierelement (34) in der Richtung der Achse (19) des Gehäuses (9) nicht verschiebbar, jedoch um die Achse (19) herum drehbar über ein Ende einer eingeschraubten Gewindebuchse (33) in dem Gehäuse (9) befestigt ist, dass die Gewindebuchse (33) von einem Einstellelement (36) umschlossen ist, dass in einer radialen Ebene der Gewindebuchse (33) und des Einstellelementes (36) miteinander zusammenwirkende Zähne (37) mit einer geringen axialen Ausdehnung vorhanden sind, die in der Arretierposition für das Einstellelement (36) Drehung der Gewindebuchse (33) und des Einstellelementes (36) zueinander verhindem, und dass das Arretierelement (34) sowie das Einstellelement (36) in einer zweiten axialen Ebene miteinander zusammenwirkende Zähne (38) aufweisen, wobei die Zähne an dem Arretierelement (34) eine vorgegebene radiale Länge aufweisen, so dass das Einstellelement (36) in einer zweiten Position aus der Arretierposition herausgezogen das Arretierelement (34) in dem Gehäuse (9) drehen kann.

5. Ventilbaugruppe nach Anspruch 4, **dadurch gekennzeichnet, dass** das Arretierelement (34) axial vorstehende Zapfen (39) aufweist, die in Bahnen im Umfang der topfförmigen Buchse (41) eingreifen.

6. Ventilbaugruppe nach den Ansprüchen 3 - 5, **dadurch gekennzeichnet, dass** das Einstellelement (36) in der Arretierposition durch eine Feder (35) gehalten wird, die zwischen einen Flansch am freien Ende des Arretierelementes (34) und eine Kontaktfläche an dem Einstellelement (36) eingeführt wird.

7. Ventilbaugruppe nach Anspruch 1, **dadurch gekennzeichnet, dass** die Spindel (42) sich durch die topfförmige Buchse (41) und das Arretierelement (34) hindurch erstreckt, dass die Feder (43), die die Spindel (42) umschließt, zwischen dem Arretierelement (34) und dem Boden der topfförmigen Buchse (41) zusammengedrückt wird, und dass an dem Ende, das im Inneren der topfförmigen Buchse (41) vorsteht, die Spindel (42) die Dichtung (32) aufweist, die an der Auflagefläche (28a) anliegt und die Öffnung (28) verschließt.

## Revendications

1. Ensemble de vanne pour système à fluide caloporteur qui circule à travers une pluralité d'échangeurs de chaleur (5) dans le système, comprenant une vanne thermostatique (12) ayant un corps (9) qui comporte une entrée (15) et une sortie (16), une tige (42) qui peut être déplacée par un soufflet de thermostat et est pourvue d'une garniture d'étanchéité (32) et qui peut, en fonction de la dilatation / contraction du soufflet de thermostat et contre la pression d'un ressort (43) qui entoure la tige (42), respectivement fermer et ouvrir un orifice (28) présentant un siège (28a) dans une paroi transversale (29) prévue dans le corps (9) entre l'entrée (15) et la sortie (16), le dit ensemble de vanne comprenant en outre un dispositif de préréglage ajustable (11), **caractérisé en ce que** l'ensemble de vanne (8) comprend également une membrane commandée par pression différentielle (17, 21) pour la régulation de la pression différentielle du fluide caloporteur à travers le dispositif de préréglage ajustable (11) et la vanne thermostatique (12), la dite vanne thermostatique étant constituée du siège (28a) et de la garniture d'étanchéité (32) et étant placée entre l'entrée (15) et la membrane (17, 21), et **en ce que** la vanne thermostatique (12) est agencée de manière à pouvoir interrompre l'écoulement entre l'entrée (15) et la sortie (16) indépendamment du dispositif de préréglage ajustable (11).

2. Ensemble de vanne selon la revendication 1, **caractérisé en ce que** la membrane (17) de la vanne de pression différentielle (10) est placée dans un premier manchon (18) qui est disposé dans le corps (9) et suspendu coaxialement autour de l'axe (19) de celui-ci, **en ce qu'**un ressort (25) est prévu entre la membrane (17) et le fond du premier manchon (18), **en ce qu'**un premier canal (26) partant de l'entrée (15) conduit au côté supérieur de la membrane (17), **en ce qu'**au moins un deuxième canal (30) conduit de l'orifice (28) au côté inférieur de la membrane (17) qui est agencée de manière à pouvoir se replier sur des fentes (22) du premier manchon (18) pour au moins une fermeture partielle des fentes (22), et **en ce que** le corps (9) présente, en face des fentes (22), un évidement annulaire (23) qui est ouvert vers la sortie (16).

3. Ensemble de vanne selon la revendication 1, **caractérisé en ce que**, dans le corps (9) et suspendu coaxialement autour de l'axe (19) de celui-ci, le dispositif de préréglage ajustable (11) comprend un manchon en forme de gobelet (41) dont l'embouchure présente un bord qui est découpé d'une manière telle que la moitié restante (41a) peut s'étendre au-delà de l'entrée (15) dans une position angulaire donnée du manchon en forme de gobelet (41).

4. Ensemble de vanne selon la revendication 3, **caractérisé en ce qu'**un élément de verrouillage (34) est fixé d'une manière non déplaçable dans la direction de l'axe (19) du corps (9), mais d'une manière tournante autour de l'axe (19), par une extrémité d'un manchon fileté vissé (33) dans le corps (9), **en ce que** le manchon fileté (33) est entouré par un élément de positionnement (36), **en ce que**, dans un plan radial du manchon fileté (33) et de l'élément de positionnement (36), il est prévu des dents coopérantes (37) de faible longueur axiale qui empêchent, dans la position de verrouillage de l'élément de positionnement (36), la rotation relative entre le manchon fileté (33) et l'élément de positionnement (36), et **en ce que** l'élément de verrouillage (34) et l'élément de positionnement (36) dans un deuxième plan radial comportent des dents coopérantes (38), les dents de l'élément de verrouillage (34) ayant une longueur axiale prédéterminée de sorte que l'élément de positionnement (36), dans une deuxième position reculée par rapport à la position de verrouillage, peut faire tourner l'élément de verrouillage (34) dans le corps (9).

5. Ensemble de vanne selon la revendication 4, **caractérisé en ce que** l'élément de verrouillage (34) comporte des broches axialement en saillie (39) qui s'engagent dans des guidages prévus dans la circonférence du manchon en forme de gobelet (41).

6. Ensemble de vanne selon les revendications 3 à 5, **caractérisé en ce que** l'élément de positionnement (36) est maintenu dans la position de verrouillage par un ressort (35) qui est inséré entre une collerette prévue sur l'extrémité libre de l'élément de verrouillage (34) et une surface de contact prévue sur l'élément de positionnement (36).

7. Ensemble de vanne selon la revendication 1, **caractérisé en ce que** la dite tige (42) traverse le manchon en forme de gobelet (41) et l'élément de verrouillage (34), **en ce que** le dit ressort (43) qui entoure la dite tige (42) est comprimé entre l'élément de verrouillage (34) et le fond du manchon en forme de gobelet (41), et **en ce que**, sur l'extrémité qui fait saillie à l'intérieur du manchon en forme de gobelet (41), la tige (42) porte la dite garniture d'étanchéité (32) qui est agencée de manière à s'appliquer contre le siège (28a) et à fermer l'orifice (28).
